# EUROPÄISCHE PATENTSCHRIFT

(11) **EP 4 616 149 B1**
(45) Veröffentlichungstag und Bekanntmachung des Hinweises auf die Patenterteilung: **08.07.2026**
(21) Anmeldenummer: 24766004.6
(22) Anmeldetag: 04.09.2024
(51) Int. Cl.: G01C 21/00, G06N 3/02, G08G 1/01, G06N 3/08, B60W 60/00, G06N 20/00, G08G 1/0962, G08G 1/0967

(54) **VERFAHREN ZUM ERSTELLEN EINES STRASSENMODELLS UND VERFAHREN ZUM BETRIEB EINES AUTOMATISIERT FAHRENDEN FAHRZEUGS**
METHOD FOR CREATING A ROAD MODEL AND METHOD FOR OPERATING AN AUTOMATICALLY DRIVING VEHICLE
PROCÉDÉ DE CRÉATION D'UN MODÈLE DE ROUTE ET PROCÉDÉ DE FONCTIONNEMENT D'UN VÉHICULE À CONDUITE AUTOMATIQUE

(30) Priorität: 21.09.2023 DE 102023003834
(43) Veröffentlichungstag der Anmeldung: 17.09.2025
(73) Patentinhaber: Mercedes-Benz Group AG, 70372 Stuttgart (DE)
(72) Erfinder: RIES, Florian, 70599 Stuttgart (DE)
(74) Vertreter: Novagraaf Group
(86) Internationale Anmeldenummer: PCT/EP2024/074683
(87) Internationale Veröffentlichungsnummer: WO 2025/061471

(56) Entgegenhaltungen:
- US-A1- 2022 067 877
- US-A1- 2023 050 402
- US-A1- 2023 132 889
- BENCHENG LIAO ET AL: "MapTR: Structured Modeling and Learning for Online Vectorized HD Map Construction", ARXIV.ORG, CORNELL UNIVERSITY LIBRARY, 201 OLIN LIBRARY CORNELL UNIVERSITY ITHACA, NY 14853, 30 January 2023 (2023-01-30), XP091424386

## Beschreibung

Die Erfindung betrifft ein Verfahren zum Erstellen eines Straßenmodells in einem vorgegebenen Umgebungsbereich eines Fahrzeugs.

Die Erfindung betrifft weiterhin ein Verfahren zum Betrieb eines automatisiert fahrenden Fahrzeugs.

Für einen Betrieb eines automatisiert, insbesondere hochautomatisiert oder autonom fahrenden Fahrzeugs werden hochauflösende Karten (= HD-Karten) verwendet, welche umfangreiche und präzise Umgebungsinformationen einer Fahrszene liefern und zur Planung eines Fahrbetriebs automatisierter Fahrzeuge verwendet werden.

Bei einer Erstellung von Straßenmodellen unter Verwendung hochauflösender Karten muss eine solche Karte im Fahrzeug registriert werden, das aus einer Draufsicht im globalen Koordinatensystem in eine Perspektive der Umgebungserfassungssensorik in ein Fahrzeugkoordinatensystem transformiert werden. Hierbei ist eine hochgenaue Lokalisierung des Fahrzeugs erforderlich, um die Daten der Karte mit mittels der Umgebungserfassungssensorik erfassten Umgebungsdaten fusionieren zu können. Dabei besteht die Gefahr, dass die Karte veraltet ist und in dieser enthaltene Kartendaten nicht mehr zu erfassten Umgebungsdaten passt. Durch besser verfügbare Sensortechnologien und große Fortschritte in der künstlichen Intelligenz, mittels welcher in einer so genannten Ende-zu-Ende-Verarbeitung eine Effizienz einer Informationsgewinnung durch die Umgebungserfassungssensorik gesteigert wird, soll eine Qualität bei der Erstellung von Straßenmodellen allein mit der Umgebungserfassung erreicht werden. Hierbei werden Methoden der so genannten generativen künstlichen Intelligenz in einer Ende-zu-Ende-Straßenmodellwahrnehmung verwendet. Solche Methoden umfassen Architekturen wie so genannte Detektions-Transformer.

Aus "Liao, B. et al.: MapTR - Structured Modeling and Learning for Online Vectorized HD Map Construction; In: arXiv:2208.14437v2 [cs.CV], 30. Januar 2023" ist ein strukturierter End-to-End-Transformer für eine Online-Konstruktion vektorisierter HD-Karten bekannt. Hierbei wird ein einheitlicher permutationsäquivalenter Modellierungsansatz verwendet, bei dem eine Modellierung von Kartenelementen als Punktmenge mit einer Gruppe äquivalenter Permutationen, die eine Form eines Kartenelements beschreibt und einen Lernprozess stabilisiert, durchgeführt. Es wird ein hierarchisches Abfrageeinbettungsschema verwendet, um strukturierte Karteninformationen flexibel zu kodieren und einen hierarchischen zweiteiligen Abgleich für das Lernen von Kertenelement durchzuführen.

US 2023/132889 A1 offenbart ein Verfahren zum Erzeugen und Aktualisieren von HD-Karten unter Verwendung von Daten aus verschiedenen, heterogenen Quellen, unter Verwendung eines neuronalen Netzwerks um Daten zu transformieren, die von verschiedenen Datenerfassungsfahrzeugen empfangen werden.

Der Erfindung liegt die Aufgabe zu Grunde, ein neuartiges Verfahren zum Erstellen eines Straßenmodells und ein neuartiges Verfahren zum Betrieb eines automatisiert fahrenden Fahrzeugs anzugeben.

Die Aufgabe wird erfindungsgemäß gelöst durch ein Verfahren zum Erstellen eines Straßenmodells, welches die im Anspruch 1 angegebenen Merkmale aufweist, und durch ein Verfahren zum Betrieb eines automatisiert fahrenden Fahrzeugs, welches die im Anspruch 8 angegebenen Merkmale aufweist.

Vorteilhafte Ausgestaltungen der Erfindung sind Gegenstand der Unteransprüche.

Das Verfahren zum Erstellen eines Straßenmodells in einem vorgegebenen Umgebungsbereich eines Fahrzeugs zeichnet sich erfindungsgemäß dadurch aus, dass
- ein auf künstlicher Intelligenz basierendes Grundmodell von Straßen für eine bestimmte geografische Region ermittelt, mit Daten der geografischen Region trainiert und in dem Fahrzeug hinterlegt wird,
- für die geografische Region eine Vielzahl additiver, auf künstlicher Intelligenz basierender Teilmodelle von Straßen mit jeweils lokaler Gültigkeit für einen begrenzten Ortsbereich der geografischen Region erstellt und ausschließlich mit Daten aus dem jeweiligen Ortsbereich trainiert werden,
- die additiven Teilmodelle in einer fahrzeugexternen Recheneinheit, beispielsweise einem Backendserver, hinterlegt werden,
- während eines Fahrbetriebs des Fahrzeugs vor einem Erreichen eines Umgebungsbereichs des Fahrzeugs ein für diesen Umgebungsbereich gültiges additives Teilmodell von der Recheneinheit abgerufen und an das Fahrzeug übertragen wird,
- mittels einer Umgebungserfassungssensorik des Fahrzeugs Umgebungsdaten des Umgebungsbereichs erfasst werden und
- mittels des Grundmodells und des Teilmodells ausschließlich aus den erfassten Umgebungsdaten das Straßenmodell für den Umgebungsbereich erstellt wird,
   wobei bei der Erstellung des Straßenmodells für mehrere Abschnitte einer Straße jeweils
- ein aus den Umgebungsdaten ermittelter und einen Verlauf des jeweiligen Abschnitts beschreibender Eingangsvektor dem Grundmodell und dem additiven Teilmodell jeweils als Eingangsdatum zugeführt wird,
- mittels des Grundmodells ein den Abschnitt in dem Straßenmodell beschreibender Grund-Ausgangsvektor gebildet wird,
- mittels des additiven Teilmodells ein den Abschnitt in dem Straßenmodell beschreibender Teil-Ausgangsvektor gebildet wird und
- der Grund-Ausgangsvektor und der Teil-Ausgangsvektor zu einem Gesamt-Ausgangsvektor des Straßenmodells aufsummiert werden.

Unter einem Straßenmodell wird dabei beispielsweise ein Modell der statischen Welt verstanden, welches keine Daten von beweglichen Objekten enthält. Dabei enthält das Straßenmodell beispielsweise zumindest eine Repräsentation eines Spurverlaufs einer so genannten Ego-Fahrspur, das heißt einer Fahrspur, auf welcher sich das Fahrzeug befindet. Auch können Topologien von weiteren Fahrspuren, beispielsweise aller Fahrspuren im Umgebungsbereich des Fahrzeugs, und/oder Verläufe von Haltelinien, Randbegrenzungen und/oder Bordsteinen in dem Straßenmodell enthalten sein. Insbesondere wird das Straßenmodell in einem Koordinatensystem des Fahrzeugs aus einer Perspektive der Umgebungserfassungssensorik erstellt.

Die Erfindung ermöglicht eine besonders einfache und zuverlässige Erstellung des Straßenmodells durch einfache additive Überlagerung von Grund-Ausgangsvektoren und Teil-Ausgangsvektoren zu Gesamt-Ausgangsvektoren.

Mittels des vorliegenden Verfahrens ist es in besonders vorteilhafter Weise möglich, das Straßenmodell ohne die Verwendung von hochauflösenden Karten zu erstellen. Mittels des vorliegenden Verfahrens ist es durch die Verwendung des Grundmodells, welches beispielsweise auf breiten Daten gemäß "Liao, B. et al.: MapTR - Structured Modeling and Learning for Online Vectorized HD Map Construction; In: arXiv:2208.14437v2 [cs.CV], 30. Januar 2023" trainiert ist, und mittels der additiven Teilmodelle unter ausschließlicher Verwendung der Umgebungserfassungssensorik erfassten Umgebungsdaten möglich, das Straßenmodell im Fahrbetrieb des Fahrzeugs ohne hochauflösende Karten erstellen zu können. Zum Training des Grundmodells und der Teilmodelle ist jedoch eine Verwendung von hochauflösenden Karten möglich.

Dabei ermöglicht das Verfahren, einen Algorithmus zur Erzeugung des Straßenmodells in besonders einfacher Weise an lokale Besonderheiten im jeweiligen Umgebungsbereich des Fahrzeugs anzupassen. Beispielsweise wird das additive Teilmodell dabei lediglich durch das am neuen Ort bzw. im neuen Umgebungsbereich geltende additive Teilmodell ersetzt. Das heißt insbesondere, dass das jeweilige additive Teilmodell temporär genutzt wird, solange sich das Fahrzeug im jeweiligen Umgebungsbereich befindet, benutzt. Da das Training der Teilmodelle ausschließlich mit Daten aus dem jeweils zugehörigen Ortsbereich erfolgt, ist dieses Training gegenüber dem Training des Grundmodells weniger komplex und die Teilmodelle enthalten weniger Daten als das Grundmodell. Dies ermöglicht, dass für eine ortsspezifische Aktualisierung des Algorithmus in Form der Teilmodelle lediglich wenige Daten von der Recheneinheit an das Fahrzeug übertragen werden muss. Für diese Übertragung können in besonders vorteilhafter Weise bereits existente und bekannte Infrastrukturen ohne erforderliche Modifikationen verwendet werden, wie sie beispielsweise bereits zur Übertragung von hochauflösenden Karten an das Fahrzeug genutzt werden. Das Training der Teilmodelle mit wenigen Daten ermöglicht weiterhin, dass diese schnell erstellt und bei Bedarf schnell aktualisiert werden können.

Mittels des vorliegenden Verfahrens ist es somit in besonders vorteilhafter Weise möglich, nahtlos eine Ende-zu-Ende-Straßenmodellwahrnehmung im Fahrzeug zu integrieren. Im Gegensatz zu kartenbasierten Ansätzen werden die Funktionalitäten Fahrzeugpositionierung und Straßenmodellfusion grundsätzlich abgedeckt, wodurch eine Komplexität einer zur Ausführung des Verfahrens erforderlichen Architektur reduziert wird. Gegenüber herkömmlichen Ansätzen zur Ende-zu-Ende-Straßenmodellwahrnehmung, bei welchen das Potenzial von hochauflösenden Karten zur Bereitstellung dessen, was von der Umgebungserfassungssensorik nicht erkannt werden kann, sowie eine Stabilität von extern aggregierten Kartendaten verloren gehen, ist eine solche Erkennung dagegen bei gleichzeitig hoher Stabilität möglich. Durch eine lokale Spezialisierung mittels der additiven Teilmodelle wird die Erkennungsleistung des Verfahrens somit erheblich erhöht.

Gemäß einer möglichen Ausgestaltung des Verfahrens werden als Umgebungsdaten Rohdaten der Umgebungserfassungssensorik verwendet. Dies ermöglicht, dass die mittels der Umgebungserfassungssensorik erfassten Daten als Rohdaten ohne Weiterverarbeitung unmittelbar als Umgebungsdaten genutzt werden können.

Gemäß einer weiteren möglichen Ausgestaltung des Verfahrens werden/wird das Grundmodell und/oder die Teilmodelle mittels eines Ende-zu-Ende-Lernprozesses trainiert. Durch einen solchen Lernprozess wird ermöglicht, dass alle zur Erzielung des gewünschten Ergebnisses notwendigen Zwischenschritte in einem einheitlichen Grundmodell integriert sind. Dabei kann das Grundmodell maschinell mittels künstlicher neuronaler Netze trainiert werden.

Gemäß einer weiteren möglichen Ausgestaltung des Verfahrens wird vor einem Verlassen eines aktuell vom Fahrzeug befahrenen Umgebungsbereichs ein für einen als nächstes von dem Fahrzeug zu durchfahrenen Umgebungsbereich gültiges additives Teilmodell von der Recheneinheit abgerufen und an das Fahrzeug übertragen. Mittels des Grundmodells und des Teilmodells wird aus den erfassten Umgebungsdaten das Straßenmodell für den Umgebungsbereich erstellt. Dies ermöglicht, dass eine Anzahl von im Fahrzeug gespeicherten Teilmodellen und ein daraus resultierender erforderlicher Speicherplatz minimiert sind.

Gemäß einer weiteren möglichen Ausgestaltung des Verfahrens wird nach einem Verlassen eines aktuell vom Fahrzeug befahrenen Umgebungsbereichs das den verlassenen Umgebungsbereich gültige additive Teilmodell im Fahrzeug gelöscht. Auch dies ermöglicht, dass eine Anzahl von im Fahrzeug gespeicherten Teilmodellen und ein daraus resultierender erforderlicher Speicherplatz minimiert sind.

Gemäß einer weiteren möglichen Ausgestaltung des Verfahrens wird nach einem Verlassen eines aktuell vom Fahrzeug befahrenen Umgebungsbereich das den verlassenen Umgebungsbereich gültige additive Teilmodell an die zentrale Recheneinheit übermittelt. Dies ermöglicht, dass das Teilmodell beim Befahren des Umgebungsbereichs weiter trainiert werden kann und das trainierte Teilmodell dann für weitere Befahrungen dieses Umgebungsbereichs durch das Fahrzeug oder durch andere Fahrzeuge von der Recheneinheit an diese übermittelt werden kann.

Gemäß einer weiteren möglichen Ausgestaltung des Verfahrens werden bei der Erstellung des Straßenmodells aus den erfassten Umgebungsdaten und mittels des jeweiligen additiven Teilmodells Existenzen und Positionen von immobilen Umgebungsmerkmalen in dem zugehörigen Umgebungsbereich gelernt. Bei einer späteren Befahrung dieses Umgebungsbereichs wird die Existenz eines gelernten immobilen Umgebungsmerkmals impliziert, wenn dieses nicht in den während dieser späteren Befahrung des Umgebungsbereichs erfassten Umgebungsdaten vorhanden ist. Lernt der das Verfahren ausführende Algorithmus über ein additives Modell, das beispielsweise speziell für einen bestimmten Stadtbereich einer Stadt trainiert worden ist, dass in diesem Stadtbereich an einen Kreisverkehr hinter einem Zebrastreifen immer ein als Haltestreifen ausgebildetes Umgebungsmerkmal vorhanden ist, dann kann der Algorithmus den Haltestreifen auch dann detektieren, wenn die Umgebungserfassungssensorik diesen, beispielsweise aufgrund einer Verdeckung, nicht erfassen kann. Das heißt der Haltestreifen ist in diesem Fall vorhanden, wird von der Umgebungserfassungssensorik nicht erfasst, aber durch den Algorithmus erkannt. Durch die Berücksichtigung derartiger, auch als Halluzinationen bezeichneten Umstände, kann die Zuverlässigkeit des mittels des Verfahrens durchgeführten Erstellens des Straßenmodells erhöht werden und das Straßenmodell auch bei Sichtverdeckungen der Umgebungserfassungssensorik vollständig und exakt erzeugt werden. Das heißt, es wird eine überlegene Erkennungsleistung einer Kl-basierten Ende-zu-Ende-Architektur erreicht, jedoch mit einer Straßenmodellschätzung, die über einen für die Umgebungserfassungssensorik sichtbaren Bereich hinausgeht.

Gemäß einer weiteren möglichen Ausgestaltung des Verfahrens wird als geografische Region ein Staatsgebiet, ein Kontinent oder eine geografische Gesamtheit der Erde verwendet. Auch können andere begrenzte Gebiete als geografische Region verwendet werden.

Gemäß einer weiteren möglichen Ausgestaltung des Verfahrens wird eine aktuelle Position des Fahrzeugs in der geografischen Region mittels eines satellitengestützten Positionsbestimmungssystems ermittelt. Dies ermöglicht eine zuverlässige und exakte Ermittlung der Position des Fahrzeugs, wobei hierzu ein bereits im Fahrzeug vorhandenes Positionsbestimmungssystem verwendet werden kann.

In einem Verfahren zum Betrieb eines automatisiert fahrenden Fahrzeugs werden erfindungsgemäß ein mittels eines vorgenannten Verfahrens erzeugtes Straßenmodell und anhand der Umgebungsdaten ermittelte Objekt- und/oder Hindernisdaten in einem Planungs- und Steuerungsmodul verwendet, um eine Solltrajektorie zu planen, entlang der das Fahrzeug automatisiert geführt wird.

Durch die Verwendung des im Fahrbetrieb ohne hochauflösende Karten erstellten Straßenmodells kann einerseits eine einfachere Lokalisierung des Fahrzeugs erfolgen und andererseits besteht nicht die Gefahr von veralteten Kartendaten, welche nicht mehr zu erfassten Umgebungsdaten passen. Weiterhin ist es möglich, den Algorithmus zur Erzeugung des Straßenmodells in besonders einfacher Weise an lokale Besonderheiten im jeweiligen Umgebungsbereich des Fahrzeugs anzupassen. Durch den Abruf der somit stets aktuell gehaltenen additiven Teilmodelle ist eine besonders zuverlässige und exakte Planung der Solltrajektorie für den automatisierten Fahrbetrieb des Fahrzeugs möglich. Daraus folgend kann dieser Fahrbetrieb besonders exakt und zuverlässig ausgeführt werden.

Gemäß einer möglichen Ausgestaltung des Verfahrens werden in Abhängigkeit des Straßenmodells und in Abhängigkeit der Objekt- und/oder Hindernisdaten Stellbefehle für Aktoren des Fahrzeugs erzeugt, um das Fahrzeug längs- und quergeregelt entlang der geplanten Solltrajektorie zu führen. Dies ermöglicht eine zuverlässige automatisierte Ausführung des Fahrbetriebs.

Gemäß einer weiteren möglichen Ausgestaltung des Verfahrens werden die Stellbefehle für Beschleunigungsaktoren und/oder Verzögerungsaktoren und/oder Lenkaktoren des Fahrzeugs erzeugt werden.

Ausführungsbeispiele der Erfindung werden im Folgenden anhand einer Zeichnung näher erläutert.

Dabei zeigen:
- Fig. 1: schematisch ein Blockschaltbild einer Vorrichtung zum Betrieb eines automatisiert fahrenden Fahrzeugs nach dem Stand der Technik,
- Fig. 2: schematisch ein Bild eines Umgebungsbereichs eines Fahrzeugs mit einem überlagerten Straßenmodells,
- Fig. 3: schematisch ein Blockschaltbild einer Vorrichtung zum Betrieb eines automatisiert fahrenden Fahrzeugs,
- Fig. 4: schematisch ein Blockschaltbild eines Grundmodells und eines additiven Teilmodells bei einer Verarbeitung eines Eingangsvektors zu einem Gesamt-Ausgangsvektor und
- Fig. 5: schematisch ein Training eines additiven Teilmodells.

Einander entsprechende Teile sind in allen Figuren mit den gleichen Bezugszeichen versehen.

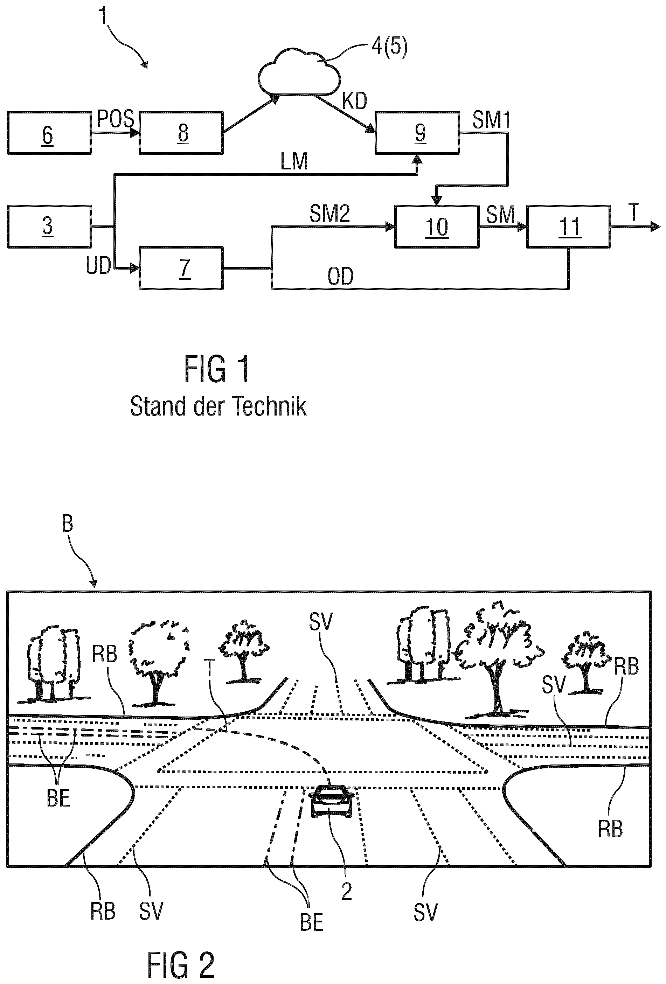

In Figur 1 ist ein Blockschaltbild einer Vorrichtung 1 zum Betrieb eines in Figur 2 näher gezeigten automatisiert fahrenden Fahrzeugs 2 nach dem Stand der Technik dargestellt.

Automatisiert, insbesondere hochautomatisiert oder autonom fahrende Fahrzeuge 2 umfassen eine Umgebungserfassungssensorik 3, mittels welcher unter anderem eine optische Spurerkennung zur Bereitstellung eines Straßenmodells SM2 durchgeführt wird. Hierzu wird mittels einer Fusionseinheit 7 eine Fusion von mittels verschiedener Sensoren der Umgebungserfassungssensorik 3 in einem Umgebungsbereich des Fahrzeugs 2 erfassten Umgebungsdaten UD durchgeführt. Weiterhin werden aus den fusionierten Umgebungsdaten UD Objekt- und/oder Hindernisdaten OD von in dem Umgebungsbereich befindlichen Objekten und Hindernissen ermittelt.

Da eine solche optische Spurerkennung in ihrer Leistung und Reichweite begrenzt und anfällig für Verdeckungen ist, verwenden bekannte Konzepte zur Ausführung eines automatisierten Fahrbetriebs zusätzlich eine von einer fahrzeugexternen Recheneinheit 4, insbesondere einem so genannten Backend, bereitgestellte hochauflösende Karte 5, um das wahrnehmungsbasierte Straßenmodell SM2 mittels Kartendaten KD zu verbessern.

Hierzu wird mittels eines beispielsweise satellitengestützt ausgebildeten Positionsbestimmungssystems 6 eine Position POS des Fahrzeugs 2 bestimmt. Für einen in einem vorgegebenen Umkreis um diese Position POS befindlichen Umgebungsbereich wird mittels einer Kommunikationseinheit 8 ein diesen Umgebungsbereich abbildender Kartenausschnitt der Karte 5 von der Recheneinheit 4 angefordert und in Form der Kartendaten KD von dieser an das Fahrzeug 2 übertragen.

Die Kartendaten KD und mittels der Sensorfusion bestimmte Lokalisierungsmerkmale LM werden einer Verarbeitungseinheit 9 zugeführt, mittels welcher eine genaue und präzise Fahrzeuglokalisierung in dem Kartenausschnitt durchgeführt wird. Hierbei werden die Kartendaten KD aus einer Ego-Perspektive des Fahrzeugs 2, das heißt aus einer Perspektive der Umgebungserfassungssensorik 3, registriert, und es wird ein kartenbasiertes Straßenmodell SM1 erstellt.

Anschließend werden das wahrnehmungsbasierte Straßenmodell SM2 und das kartenbasierte Straßenmodell SM1 in einer weiteren Fusionseinheit 10 zu einem Straßenmodell SM fusioniert.

Dieses so erzeugte Straßenmodell SM und die Objekt- und/oder Hindernisdaten OD werden dann einem Planungs- und Steuerungsmodul 11 zugeführt, welches eine Solltrajektorie T plant, entlang der das Fahrzeug 2 automatisiert geführt werden soll. Insbesondere werden in Abhängigkeit der Solltrajektorie T Stellbefehle für Aktoren des Fahrzeugs 2 erzeugt, um das Fahrzeug 2 längs- und quergeregelt entlang der geplanten Solltrajektorie T zu führen.

Nachteilig an der vorbeschriebenen Nutzung der Kartendaten KD zur Erstellung des Straßenmodells SM ist einerseits ein hoher Aufwand zur Realisierung der erforderlichen hochgenauen Lokalisierung des Fahrzeugs 2, um die Kartedaten KD mit den mittels der Umgebungserfassungssensorik 3 erfassten Umgebungsdaten UD fusionieren zu können, und andererseits, dass die Karte 5 aufgrund von langen Aktualisierungsveröffentlichungsprozessen nur langsam an Veränderungen in der realen Welt angepasst wird und somit häufig veraltet ist.

Figur 2 zeigt ein Bild B eines Umgebungsbereichs eines Fahrzeugs 2 mit einem überlagerten Straßenmodell SM.

Dabei ist das Straßenmodell SM ein Modell der statischen Welt, welches keine Daten von beweglichen Objekten enthält. Das Straßenmodell SM enthält zumindest eine Repräsentation eines Spurverlaufs SV einer so genannten Ego-Fahrspur, das heißt einer Fahrspur, auf welcher sich das Fahrzeug 2 befindet. Auch können Topologien von weiteren Fahrspuren, beispielsweise aller Fahrspuren im Umgebungsbereich des Fahrzeugs 2, und/oder Verläufe von Haltelinien, Randbegrenzungen RB und/oder Bordsteinen in dem Straßenmodell SM enthalten sein.

Im dargestellten Straßenmodell SM sind Spurverläufe SV gepunktet dargestellt. Randbegrenzungen RB sind mittels durchgezogenen Verläufen und gesperrte und/oder nicht überfahrbare Bereiche BE sind durch Punkt-Strich-Verläufe dargestellt. Weiterhin ist eine geplante Trajektorie T des Fahrzeugs 2 mittels eines gestrichelten Verlaufs dargestellt. Die geplante Trajektorie T ist jedoch nicht Bestandteil des Spurmodells SM.

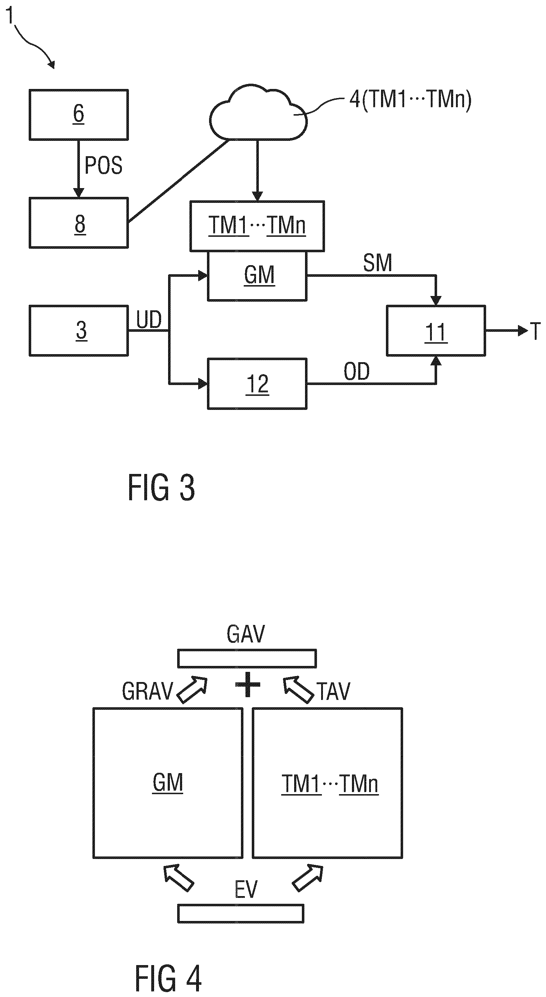

In Figur 3 ist ein Blockschaltbild eines möglichen Ausführungsbeispiels einer Vorrichtung 1 zum Betrieb des automatisiert fahrenden Fahrzeugs 2 dargestellt, mittels welcher ein mögliches Ausführungsbeispiel eines erfindungsgemäßen Verfahrens zum Betrieb des automatisiert fahrenden Fahrzeugs 2 ausgeführt wird.

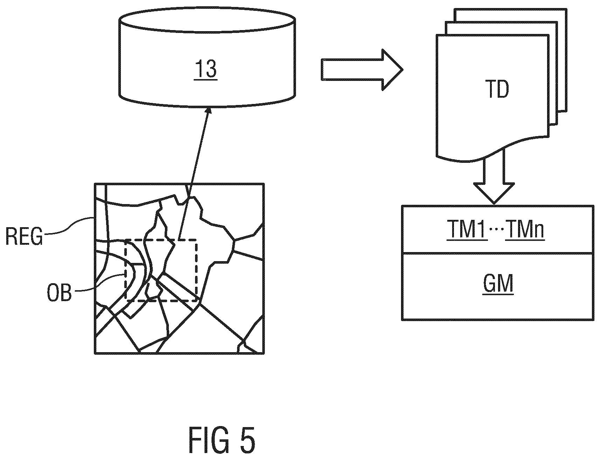

Zur Behebung der oben genannten Nachteile der Nutzung von hochauflösenden Karten 5 zur Erstellung von Straßenmodellen SM, wird ein auf künstlicher Intelligenz basierendes Grundmodell GM von Straßen für eine bestimmte, in Figur 5 näher dargestellte geografische Region REG ermittelt, mit Daten der geografischen Region REG trainiert und in dem Fahrzeug 2 hinterlegt. Die geografische Region REG kann dabei ein Staatsgebiet, ein Kontinent oder eine geografische Gesamtheit der Erde sein. Auch können andere begrenzte Gebiete als geografische Region REG verwendet werden.

Das Training des Grundmodells GM erfolgt derart auf breiten Daten, dass das Grundmodell GM in der Lage ist, Straßenmodelle SM mit möglichst minimaler Verzerrung oder Halluzinationen über eine gesamte Bandbreite an Szenarien zu erstellen. Beispielsweise wird dieses Training mittels eines so genannten SafeAD-Verfahrens gemäß https://www.safead.de/ (abgerufen am 07. September 2023 um 11:03 Uhr) und https://www.autonomousvehicleinternational.com/news/expo-news-safead-presents-offline-hd-maps-and-3d-perception-system.html (abgerufen am 07. September 2023 um 11:08 Uhr) durchgeführt. Hierbei wird ein auf künstlicher Intelligenz beruhender Algorithmus für eine durchgängige Umgebungswahrnehmung beim autonomen Fahren eines Fahrzeugs 2 verwendet, wobei eine Objekterkennung und eine Straßenmodellschätzung durchgeführt werden. Alternativ oder zusätzlich kann das Training des Grundmodells GM auch gemäß "Liao, B. et al.: MapTR - Structured Modeling and Learning for Online Vectorized HD Map Construction; In: arXiv:2208.14437v2 [cs.CV], 30. Januar 2023" durchgeführt werden.

Weiterhin wird für die geografische Region REG eine Vielzahl additiver, auf künstlicher Intelligenz basierender Teilmodelle TM1 bis TMn von Straßen mit jeweils lokaler Gültigkeit für einen in Figur 5 näher dargestellten begrenzten Ortsbereich OB der geografischen Region REG erstellt und ausschließlich mit Daten aus dem jeweiligen Ortsbereich OB trainiert. Diese trainierten additiven Teilmodelle TM1 bis TMn werden in der fahrzeugexternen Recheneinheit 4 hinterlegt. Das Training der additiven Teilmodelle TM1 bis TMn erfolgt beispielsweise analog zum Training des Grundmodells GM, jedoch spezialisiert für den begrenzten Ortsbereich OB.

Die additiven Teilmodelle TM1 bis TMn sind beispielsweise gemäß einer so genannten Low-Rank-Adaption (kurz: LoRA) konzipiert. Dabei sind die Teilmodelle TM1 bis TMn aufgrund des begrenzten Ortsbereichs OB extrem leicht und schnell zu trainieren. Mittels der Teilmodelle TM1 bis TMn kann das Grundmodell GM erweitert werden, ohne es zu ändern. Sie können also dynamisch aktiviert und deaktiviert werden, indem abhängig von der georeferenzierten Position POS des Fahrzeugs 2 ein spezielles additives Teilmodell TM1 bis TMn von der Recheneinheit 4 heruntergeladen und in das Grundmodell GM eingefügt wird.

Das heißt, dass während des Fahrbetriebs des Fahrzeugs 2 vor einem Erreichen eines Umgebungsbereichs des Fahrzeugs 2 ein für diesen Umgebungsbereich gültiges additives Teilmodell T1 bis Tm mittels der Kommunikationseinheit 8 von der Recheneinheit 4 abgerufen und an das Fahrzeug 2 übertragen wird. Mittels des Grundmodells GM und des übertragenen Teilmodells TM1 bis TMn wird ausschließlich aus den mittels der Umgebungserfassungssensorik 3 erfassten Umgebungsdaten UD das Straßenmodell SM für den Umgebungsbereich erstellt, wobei hierzu während des Fahrbetriebs des Fahrzeugs 2 mittels der Umgebungserfassungssensorik 3 dauerhaft die Umgebung des Fahrzeugs 2 in Form der Umgebungsdaten UD und mittels des Positionsbestimmungssystems 6 die Position POS des Fahrzeugs 2 erfasst werden. Hierbei werden als Umgebungsdaten UD beispielsweise Rohdaten der Umgebungserfassungssensorik 3 verwendet.

Durch die mittels der Teilmodelle TM1 bis TMn realisierte lokale Spezialisierung wird eine Erkennungsleistung erheblich verbessert. Weiterhin ermöglicht die Verwendung der Teilmodelle TM1 bis TMn, dass zumindest Teile des Straßenmodells SM in Bereichen ergänzt und erweitert werden können, welche von der Umgebungserfassungssensorik 3 nicht erfasst werden können. Dies ist möglich, indem Umgebungsmerkmale dieser Bereiche aus dem gelernten Kontext mittels des entsprechenden Teilmodells TM1 bis TMn "halluziniert" werden. In den meisten Anwendungen handelt es sich bei dieser Halluzination um einen unerwünschten Effekt, der durch unzureichend breite Trainingsdaten TD verursacht wird und die Gefahr birgt, dass er plausible, aber falsche Ergebnisse liefert. Vorliegend wird die Halluzination dagegen ausgenutzt, wobei eine Konzentration bewusst stark auf Straßenstrukturen liegt, von denen bekannt ist, dass sie sich an einem bestimmten Ort befinden. Es ist auch möglich, die additiven Teilmodelle TM1 bis TMn geringerer zu gewichten; um eine bessere Live-Wahrnehmung zu erhalten.

Nach einem Verlassen des aktuell vom Fahrzeug 2 befahrenen Umgebungsbereichs wird das den verlassenen Umgebungsbereich gültige additive Teilmodell TM1 bis TMn im Fahrzeug 2 gelöscht. Auch ist es möglich, dass das Teilmodell TM1 bis TMn während der Nutzung im Fahrzeug 2 weiter trainiert wird und nach dessen Verwendung weitertrainiert an die zentrale Recheneinheit 4 übermittelt wird.

Das erzeugte Straßenmodell SM und mittels eines Ende-zu-Ende trainierten Modells 12 ermittelte Objekt- und/oder Hindernisdaten OD werden dann einem Planungs- und Steuerungsmodul 11 zugeführt, welches eine Solltrajektorie T plant, entlang der das Fahrzeug 2 automatisiert geführt werden soll. Insbesondere werden in Abhängigkeit der Solltrajektorie T Stellbefehle für Aktoren des Fahrzeugs 2 erzeugt, um das Fahrzeug 2 längs- und quergeregelt entlang der geplanten Solltrajektorie T zu führen.

Figur 4 zeigt ein Blockschaltbild eines Grundmodells GM und eines additiven Teilmodells TM1 bis TMn bei einer Verarbeitung eines Eingangsvektors EV zu einem Gesamt-Ausgangsvektor GAV. Diese Verarbeitung wird beispielsweise gemäß der oben genannten Low-Rank-Adaption durchgeführt.

Hierbei wird bei der Erstellung des Straßenmodells SM für mehrere Abschnitte einer Straße jeweils ein aus den Umgebungsdaten UD ermittelter und einen Verlauf des jeweiligen Abschnitts beschreibender Eingangsvektor EV dem Grundmodell GM und dem jeweils genutzten additiven Teilmodell TM1 bis TMn jeweils als Eingangsdatum zugeführt.

Mittels des Grundmodells GM wird ein den Abschnitt in dem Straßenmodell SM beschreibender Grund-Ausgangsvektor GRAV gebildet.

Mittels des additiven Teilmodells TM1 bis TMn wird ein den Abschnitt in dem Straßenmodell SM beschreibender Teil-Ausgangsvektor TAV gebildet.

Der Grund-Ausgangsvektor GRAV und der Teil-Ausgangsvektor TAV werden zu einem Gesamt-Ausgangsvektor GAV des Straßenmodells SM aufsummiert.

Dies wird für alle Abschnitte der Bestandteile des Straßenmodells SM durchgeführt.

In Figur 5 ist schematisch ein Training eines additiven Teilmodells TM1 bis TMn dargestellt.

Hierbei wird aus einer Region REG ein bestimmter Ortsbereich OB ausgewählt und aus einer Datenbasis 13 werden auf diesen Ortsbereich OB begrenzte Trainingsdaten TD zum Training des additiven Teilmodells TM1 bis TMn verwendet. Das Grundmodell GM bleibt dabei unverändert.

## Patentansprüche

1. Verfahren zum Erstellen eines Straßenmodells (SM) in einem vorgegebenen Umgebungsbereich eines Fahrzeugs (2),
wobei
- ein auf künstlicher Intelligenz basierendes Grundmodell (GM) von Straßen für eine bestimmte geografische Region (REG) ermittelt, mit Daten der geografischen Region (REG) trainiert und in dem Fahrzeug (2) hinterlegt wird,
- für die geografische Region (REG) eine Vielzahl additiver, auf künstlicher Intelligenz basierender Teilmodelle (TM1 bis TMn) von Straßen mit jeweils lokaler Gültigkeit für einen begrenzten Ortsbereich (OB) der geografischen Region (REG) erstellt und ausschließlich mit Daten aus dem jeweiligen Ortsbereich (OB) trainiert werden,
- die additiven Teilmodelle (TM1 bis TMn) in einer fahrzeugexternen Recheneinheit (4) hinterlegt werden,
- während eines Fahrbetriebs des Fahrzeugs (2) vor einem Erreichen eines Umgebungsbereichs des Fahrzeugs (2) ein für diesen Umgebungsbereich gültiges additives Teilmodell (TM1 bis TMn) von der Recheneinheit (4) abgerufen und an das Fahrzeug (2) übertragen wird,
- mittels einer Umgebungserfassungssensorik (3) des Fahrzeugs (2) Umgebungsdaten (UD) des Umgebungsbereichs erfasst werden und
- mittels des Grundmodells (GM) und des Teilmodells (TM1 bis TMn) ausschließlich aus den erfassten Umgebungsdaten (UD) das Straßenmodell (SM) für den Umgebungsbereich erstellt wird, wobei bei der Erstellung des Straßenmodells (SM) für mehrere Abschnitte einer Straße jeweils
- ein aus den Umgebungsdaten (UD) ermittelter und einen Verlauf des jeweiligen Abschnitts beschreibender Eingangsvektor (EV) dem Grundmodell (GM) und dem additiven Teilmodell (TM1 bis TMn) jeweils als Eingangsdatum zugeführt wird,
- mittels des Grundmodells (GM) ein den Abschnitt in dem Straßenmodell (SM) beschreibender Grund-Ausgangsvektor (GRAV) gebildet wird,
- mittels des additiven Teilmodells (TM1 bis TMn) ein den Abschnitt in dem Straßenmodell (SM) beschreibender Teil-Ausgangsvektor (TAV) gebildet wird und
- der Grund-Ausgangsvektor (GRAV) und der Teil-Ausgangsvektor (TAV) zu einem Gesamt-Ausgangsvektor (GAV) des Straßenmodells (SM) aufsummiert werden.

2. Verfahren nach Anspruch 1,
**dadurch gekennzeichnet, dass** als Umgebungsdaten (UD) Rohdaten der Umgebungserfassungssensorik (3) verwendet werden.

3. Verfahren nach Anspruch 1 oder 2,
**dadurch gekennzeichnet, dass** das Grundmodell (GM) und/oder die Teilmodelle (TM1 bis TMn) mittels eines Ende-zu-Ende-Lernprozesses trainiert werden/wird.

4. Verfahren nach einem der vorhergehenden Ansprüche,
**dadurch gekennzeichnet, dass** vor einem Verlassen eines aktuell vom Fahrzeug (2) befahrenen Umgebungsbereichs ein für einen als nächstes von den Fahrzeug (2) zu durchfahrenen Umgebungsbereich gültiges additives Teilmodell (TM1 bis TMn) von der Recheneinheit (4) abgerufen und an das Fahrzeug (2) übertragen wird und mittels des Grundmodells (GM) und des Teilmodells (TM1 bis TMn) aus den erfassten Umgebungsdaten (UD) das Straßenmodell (SM) für den Umgebungsbereich erstellt wird.

5. Verfahren nach einem der vorhergehenden Ansprüche,
**dadurch gekennzeichnet, dass** nach einem Verlassen eines aktuell vom Fahrzeug (2) befahrenen Umgebungsbereichs das den verlassenen Umgebungsbereich gültige additive Teilmodell (TM1 bis TMn) im Fahrzeug (2) gelöscht und/oder an die zentrale Recheneinheit (4) übermittelt wird.

6. Verfahren nach einem der vorhergehenden Ansprüche,
**dadurch gekennzeichnet, dass**
- bei der Erstellung des Straßenmodells (SM) aus den erfassten Umgebungsdaten (UD) und mittels des jeweiligen additiven Teilmodells (TM1 bis TMn) Existenzen und Positionen von immobilen Umgebungsmerkmalen in dem zugehörigen Umgebungsbereich gelernt werden und
- bei einer späteren Befahrung dieses Umgebungsbereichs die Existenz eines gelernten immobilen Umgebungsmerkmals impliziert wird, wenn dieses nicht in den während dieser späteren Befahrung des Umgebungsbereichs erfassten Umgebungsdaten (UD) vorhanden ist.

7. Verfahren nach einem der vorhergehenden Ansprüche,
**dadurch gekennzeichnet, dass** als geografische Region (REG) ein Staatsgebiet, ein Kontinent oder eine geografische Gesamtheit der Erde verwendet wird.

8. Verfahren zum Betrieb eines automatisiert fahrenden Fahrzeugs (2), wobei ein mittels eines Verfahrens nach einem der vorhergehenden Ansprüche erzeugtes Straßenmodell (SM) und anhand der Umgebungsdaten (UD) ermittelte Objekt- und/oder Hindernisdaten (OD) in einem Planungs- und Steuerungsmodul (11) verwendet werden, um eine Solltrajektorie (T) zu planen, entlang der das Fahrzeug (2) automatisiert geführt wird.

9. Verfahren nach Anspruch 9,
**dadurch gekennzeichnet, dass** in Abhängigkeit des Straßenmodells (SM) und in Abhängigkeit der Objekt- und/oder Hindernisdaten (OD) Stellbefehle für Aktoren des Fahrzeugs (2) erzeugt werden, um das Fahrzeug (2) längs- und quergeregelt entlang der geplanten Solltrajektorie (T) zu führen.

## Claims

1. Method for creating a road model (SM) in a given environmental area of a vehicle (2), wherein
- a basic model (GM) of roads based on artificial intelligence for a specific geographic region (REG) is determined, trained with data from the geographic region (REG) and stored in the vehicle (2),
- for the geographic region (REG), a plurality of additive, artificial intelligence-based sub-models (TM1 to TMn) of roads, each with local validity for a limited local area (OB) of the geographic region (REG), are created and trained exclusively with data from the particular local area (OB),
- the additive sub-models (TM1 to TMn) are stored in a vehicle-external computing unit (4),
- during driving operation of the vehicle (2) before reaching an environmental area of the vehicle (2), an additive sub-model (TM1 to TMn) valid for this environmental area is retrieved from the computing unit (4) and transferred to the vehicle (2),
- environmental data (UD) of the environmental area are acquired by means of an environmental detection sensor system (3) of the vehicle (2) and
- using the basic model (GM) and the sub-model (TM1 to TMn) the road model (SM) for the environmental area is created exclusively from the acquired environmental data (UD), wherein
when creating the road model (SM) for a plurality of sections of a road, in each case
- an input vector (EV) determined from the environmental data (UD) and describing a course of the particular section is supplied as input data to the basic model (GM) and the additive sub-model (TM1 to TMn),
- a basic output vector (GRAV) describing the section in the road model (SM) is formed using the basic model (GM),
- a partial output vector (TAV) describing the section in the road model (SM) is formed using the additive sub-model (TM1 to TMn) and
- the basic output vector (GRAV) and the partial output vector (TAV) are summed to form a total output vector (GAV) of the road model (SM).

2. Method according to claim 1,
**characterized in that** raw data from the environmental detection sensor system (3) are used as environmental data (UD).

3. Method according to claim 1 or 2,
**characterized in that** the basic model (GM) and/or the sub-models (TM1 to TMn) are/is trained using an end-to-end learning process.

4. Method according to any of the preceding claims,
**characterized in that** before an environmental area currently being traversed by the vehicle (2) is left, an additive sub-model (TM1 to TMn) valid for the next environmental area to be traversed by the vehicle (2) is retrieved from the computing unit (4) and transferred to the vehicle (2), and the road model (SM) for the environmental area is created from the acquired environmental data (UD) using the basic model (GM) and the sub-model (TM1 to TMn).

5. Method according to any of the preceding claims,
**characterized in that** after an environmental area currently being traversed by the vehicle (2) has been left, the additive sub-model (TM1 to TMn) valid for the environmental area left is deleted in the vehicle (2) and/or transmitted to the central computing unit (4).

6. Method according to any of the preceding claims,
**characterized in that**
- during the creation of the road model (SM) from the acquired environmental data (UD) and by means of the particular additive sub-model (TM1 to TMn), the existence and positions of immobile environmental features in the associated environmental area are learned and
- the existence of a learned immobile environmental feature is implied during a subsequent drive through this environmental area if the feature is not present in the environmental data (UD) acquired during this subsequent drive through the environmental area.

7. Method according to any of the preceding claims,
**characterized in that** the term geographic region (REG) is used to describe a national territory, a continent, or a geographic entirety of the Earth.

8. Method for operating an automated vehicle (2), wherein a road model (SM) generated by a method according to any of the preceding claims and object and/or obstacle data (OD) determined on the basis of the environmental data (UD) are used in a planning and control module (11) to plan a target trajectory (T) along which the vehicle (2) is guided automatically.

9. Method according to claim 9,
**characterized in that** depending on the road model (SM) and depending on the object and/or obstacle data (OD), control commands for actuators of the vehicle (2) are generated in order to guide the vehicle (2) longitudinally and laterally along the planned target trajectory (T).

## Revendications

1. Procédé de création d'un modèle de route (SM) dans une zone d'environnement prédéfinie d'un véhicule (2), dans lequel
- un modèle de base (GM) de routes basé sur l'intelligence artificielle est déterminé pour une région géographique (REG) établie, est entraîné avec des données de la région géographique (REG) et est enregistré dans le véhicule (2),
- pour la région géographique (REG), une pluralité de modèles partiels (TM1 à TMn) additifs de routes, basés sur l'intelligence artificielle et comportant respectivement une validité locale pour une zone de site (OB) limitée de la région géographique (REG), sont créés et entraînés exclusivement avec des données de la zone de site (OB) respective,
- les modèles partiels (TM1 à TMn) additifs sont enregistrés dans une unité de calcul (4) externe au véhicule,
- pendant un fonctionnement de conduite du véhicule (2), avant d'atteindre une zone d'environnement du véhicule (2), un modèle partiel (TM1 à TMn) additif valable pour cette zone d'environnement est appelé par l'unité de calcul (4) et transmis au véhicule (2),
- des données d'environnement (UD) de la zone d'environnement sont détectées par le biais d'un système de capteurs de détection d'environnement (3) du véhicule (2) et
- par le biais du modèle de base (GM) et du modèle partiel (TM1 à TMn), exclusivement à partir des données d'environnement (UD) détectées, le modèle de route (SM) pour la zone d'environnement est créé, dans lequel
lors de la création du modèle de route (SM) pour plusieurs sections d'une route, respectivement
- un vecteur d'entrée (EV) déterminé à partir des données d'environnement (UD) et décrivant un tracé de la section respective est amené au modèle de base (GM) et au modèle partiel (TM1 à TMn) additif respectivement comme donnée d'entrée,
- par le biais du modèle de base (GM), un vecteur de sortie de base (GRAV) décrivant la section dans le modèle de routes (SM) est formé,
- par le biais du modèle partiel (TM1 à TMn) additif, un vecteur de sortie partiel (TAV) décrivant la section dans le modèle de route (SM) est formé et
- le vecteur de sortie de base (GRAV) et le vecteur de sortie partiel (TAV) sont additionnés pour former un vecteur de sortie total (GAV) du modèle de route (SM).

2. Procédé selon la revendication 1,
**caractérisé en ce que,** comme données d'environnement (UD), des données brutes du système de capteurs de détection d'environnement (3) sont utilisées.

3. Procédé selon la revendication 1 ou 2,
**caractérisé en ce que** le modèle de base (GM) et/ou les modèles partiels (TM1 à TMn) est/sont entraînés par le biais d'un processus d'apprentissage de bout en bout.

4. Procédé selon l'une des revendications précédentes,
**caractérisé en ce que,** avant de quitter une zone d'environnement actuellement parcourue par le véhicule (2), un modèle partiel (TM1 à TMn) additif valable pour une zone d'environnement à parcourir ensuite par le véhicule (2) est appelé par l'unité de calcul (4) et transmis au véhicule (2), et par le biais du modèle de base (GM) et du modèle partiel (TM1 à TMn) à partir des données d'environnement (UD) détectées, le modèle de route (SM) pour la zone d'environnement est créé.

5. Procédé selon l'une des revendications précédentes,
**caractérisé en ce que,** après avoir quitté une zone d'environnement actuellement parcourue par le véhicule (2), le modèle partiel (TM1 à TMn) additif valable pour la zone d'environnement quittée est effacé dans le véhicule (2) et/ou transmis à l'unité de calcul (4) centrale.

6. Procédé selon l'une des revendications précédentes,
**caractérisé en ce que**
- lors de la création du modèle de route (SM), à partir des données d'environnement (UD) détectées et par le biais du modèle partiel (TM1 à TMn) additif respectif, des existences et des positions de caractéristiques d'environnement immobiles dans la zone d'environnement correspondante sont apprises et
- lors d'un passage ultérieur dans cette zone d'environnement, l'existence d'une caractéristique d'environnement immobile apprise est impliquée si elle n'est pas présente dans les données d'environnement (UD) détectées pendant ce passage ultérieur dans la zone d'environnement.

7. Procédé selon l'une des revendications précédentes,
**caractérisé en ce que,** comme région géographique (REG), un territoire national, un continent ou un ensemble géographique de la terre est utilisé.

8. Procédé permettant de faire fonctionner un véhicule (2) à conduite automatisée, dans lequel un modèle de route (SM) créé par le biais d'un procédé selon l'une des revendications précédentes et des données d'objet et/ou d'obstacle (OD) déterminées à l'aide des données d'environnement (UD) sont utilisés dans un module de planification et de commande (11) pour planifier une trajectoire de consigne (T) le long de laquelle le véhicule (2) est guidé de manière automatisée.

9. Procédé selon la revendication 9,
**caractérisé en ce que,** en fonction du modèle de route (SM) et en fonction des données d'objet et/ou d'obstacle (OD), des instructions de réglage sont créées pour des actionneurs du véhicule (2) afin de guider le véhicule (2) de manière régulée longitudinalement et transversalement le long de la trajectoire de consigne (T) planifiée.
